# EUROPEAN PATENT SPECIFICATION

(11) **EP 1 879 372 B1**
(45) Date of publication and mention of the grant of the patent: **24.02.2010**
(21) Application number: 06117224.3
(22) Date of filing: 14.07.2006
(51) Int. Cl.: H04M 3/533

(54) **Personalization of sound-based telecommunication services**
Personalisierung ton-basierter Telekommunikationsdienste
Personnalisation des services de télécommunication de sons

(43) Date of publication of application: 16.01.2008
(73) Proprietor: HiProCall AG, 85774 Unterföhring (DE)
(72) Inventor: Jäger, Matthias, 81675, Munich (DE)
(74) Representative: TBK-Patent

(56) References cited:
- WO-A-2005/006721
- WO-A-2005/051015
- WO-A2-02/054743
- FR-B1- 2 858 154
- US-A1- 2004 114 732

## Description

The present invention relates to personalization of sound-based telecommunication services. In particular, the present invention relates to a system and a method for providing personalized sound-based telecommunication services, such as e.g. ring tones, ring back tones, mailbox greetings and outbound greetings.

In mobile as well as landline telecommunication networks, there is a trend of increasingly emerging value-added services besides the conventional communication services. Such value-added or add-on services may be divided into data and voice services.

Value-added voice services are a commonly used feature in today's telecommunication networks, thus representing an important profit factor for carriers, i.e. network operators. Examples for such sound-based telecommunication services comprise, among others, call answering services (i.e. mailbox services), ring tone services, and (color) ring back tone services (CRBT).

For example, document US 2004/0114732 A1 discloses an apparatus and method for an editable personalized ring back tone service. Specifically, the apparatus may include a master content provider server storing at least one personalized ring back message, an internet data center connected to the master content provider server and a participating telephone service provider for retrieving the personalized ring back message when a called party is the subscriber and delivering the personalized ring back message to be heard by a calling party while connecting to the called party, and an authoring tool for generating and editing the personalized ring back message to be uploaded to the master content provider through a public website.

In addition, document WP 02/054743 A2 discloses a web based messaging system with personalized caller specific messages. The messaging system allows a user to provide caller specific personalized messages, for example voice greetings, to incoming callers. The messaging system may be configured remotely, for example via the internet/world wide web. The messaging system comprises a message and a processing system. The processing system comprises a caller identification system and a database of specific messages linked to specific caller identification data. The processing system maintains an individual customer profile for the user that the user can configure with specific messages, e.g. voice mail greetings, and to control and specify which message is provided to a particular caller.

Furthermore, document WO 2005/006721 A1 discloses a method and apparatus for changing and pushing a sound source of a supplementary service using a ring back tone on calling.

In the prior art, there are known platforms which allow users to download a number of different ring tones, to download a number of different active ring back tones, to upload mailbox greetings and to send sound greetings e.g. to friends. However, it is partly non-satisfactory and partly even annoying for the users that only a certain number of given sound samples are available. In case of ring tones, this leads for example to the problem that the user can not necessarily distinguish between his/her own terminal ringing or that of another user in the vicinity. In case of ring back tones, i.e. those audio sounds heard by a caller while waiting for a connection to a called party to be completed, especially for business users, in view of professional appearance and corporate identity it is not desired to have a standard ring back tone played to a caller.

Especially with many users in a telecommunication network, the distinction between the users' personal sound settings and services becomes increasingly less. However, not only younger users want to separate from others and express their individuality. A standard ring tone, ring back tone or greeting is thus not desired anymore.

In known systems for personalization, there is usually only provided for a selection of a fixed number of unalterable options, thus not representing an actual personalization in the real meaning of the term.

Hence, there resides a problem in that no solutions are presently available for personalization/individualization of telecommunication features to an extent acceptable for private and business users.

Thus, a solution to the above problems and drawbacks is needed for providing sound-based telecommunication services in a personalized manner.

Consequently, it is an object of the present invention to remove the above drawbacks inherent to the prior art and to provide an accordingly improved system and method.

According to the present invention, this object is achieved by what is set forth in the appended independent claims. Advantageous modifications are defined in the appended dependent claims.

With embodiments of the present invention, there is provided a universal tool which enables users to personalize sound-based telecommunication services, such as for example a mailbox greeting service, a ring tone service, a ring back tone service, and an outbound greeting service.

It is a further advantage of the present invention that the embodiments are network-based, so the system and method of the invention are independent of the terminal or identity (e.g. subscriber identity module SIM) used by a user.

It is another advantage of the present embodiments that users are enabled to design their unique sound consisting of different sound categories, such as for example music, voice, text blocks, and/or sound effects.

It is a further advantage of the embodiments of the present invention that the thus provided solution is suitable both for private and for business users.

In the following, the present invention will be described in greater detail with reference to the accompanying drawings, in which
Fig. 1 shows a block diagram of a system architecture according to an embodiment of the present invention;
Fig. 2 shows a schematic block diagram of a mailbox greeting system according to an embodiment of the present invention;
Fig. 3 shows a schematic block diagram of a mailbox greeting system according to another embodiment of the present invention;
Fig. 4 shows a schematic block diagram of a ring tone system according to an embodiment of the present invention;
Fig. 5 shows a schematic block diagram of a ring back tone system according to an embodiment of the present invention; and
Fig. 6 shows a schematic block diagram of an outbound greeting system according to an embodiment of the present invention.

The present invention is described herein with reference to particular non-limiting examples. A person skilled in the art will appreciate that the invention is not limited to these examples, and may be more broadly applied.

In particular, the present invention is described in relation to certain services of a telecommunication network with reference to example implementations. As such, the description of the embodiments given herein specifically refers to terminology which is directly related to these non-limiting examples.

Stated in general terms, the embodiments of the present invention relate to a system and a method for providing personalized sound-based telecommunication services. Such a system basically comprises a sound configuration subsystem and a service provision subsystem. Such a method basically comprises a sound configuration step being performed by a respective sound configuration subsystem and a service provision step being performed by a respective service provision subsystem. For the sake of clarity, the embodiments of the present invention will in the following mainly be described in terms of system aspects. It should however be understood by a skilled person that such description relates to respective method aspects as well.

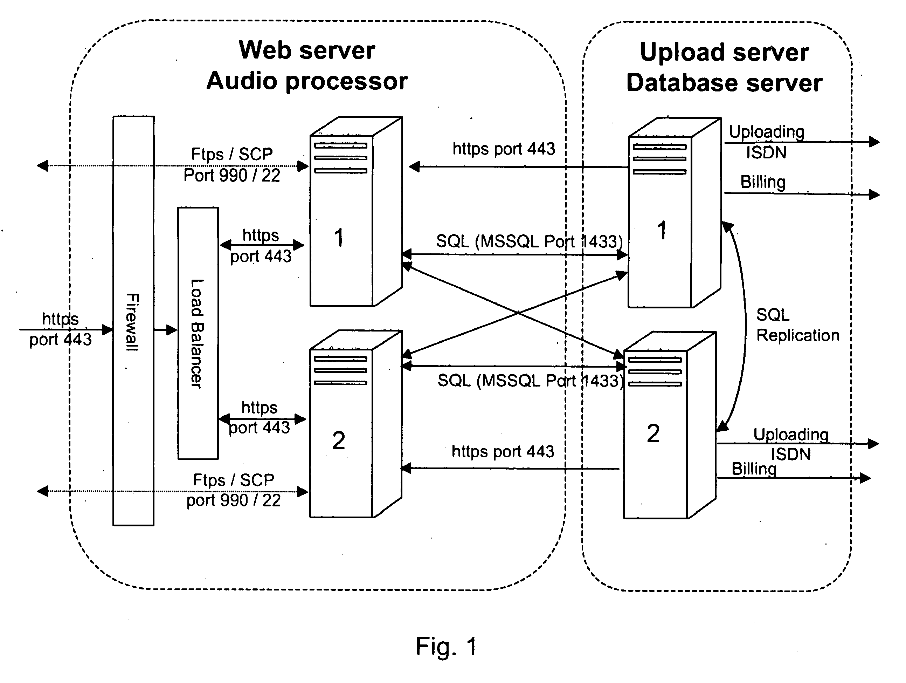

Fig. 1 shows a block diagram of system architecture according to an embodiment of the present invention. The interfaces between the individual blocks shown in Fig. 1 are denoted by an abbreviation of a protocol and a port number, via which the processing between those blocks is conducted. As these protocols and ports are merely implementation examples and as such are well-known to a skilled person, no detailed description thereof will be given hereinafter.

The left-hand part denoted by web server or audio processor represents a sound configuration subsystem. The sound configuration subsystem is adapted to provide a user with the ability to configure a personalized sound based on predetermined sound categories by way of user operation. According to the system of the present embodiment, this subsystem is implemented as a web-based tool having a web-based user interface to be operated by a user by means of a hypertext transport protocol, e.g. HTTP or HTTPS, and specific ports. In Fig. 1, this is exemplarily depicted by the incoming arrow from the left side, which is denoted by "https port 443".

The sound configuration subsystem is exemplarily depicted to comprise two parallel servers, which process traffic from a user (incoming via a firewall) according to a distribution by a load balancer.

The right-hand part denoted by upload server or database server represents (at least a part of) a service provision subsystem. The service provision subsystem is adapted to provide a personalized sound-based telecommunication service based on a basic sound-based service of a telecommunication network and the personalized sound configured at the sound configuration subsystem to a user. The two servers, which are exemplarily depicted to work in parallel, are both adapted to perform uploading and billing functionality. Details thereof will be referred to below.

By way of user operation, e.g. via the Internet, a user can choose between different sound configuration services by first selecting a predetermined sound category and then selecting a pre-configured sound element for each sound category. For implementing these features, the system (i.e. the servers of the sound configuration subsystem) comprises a storage means storing pre-configured sound elements for each sound category and selection means for selecting, for each sound category, at least one of the pre-configured sound elements.

As an example, the user may in a first step choose, as a first sound category, a music or soundbed (i.e. sound atmosphere). Pre-configured sound elements thereof may comprise e.g. several rock/pop/jazz music pieces or the like. In a second step, the user may, as a second sound category, choose a voice, for which category for example a (pre-recorded or synthesized) standard voice or a (pre-recorded) celebrity voice, e.g. of a sport star, pop star or actor, can be selected. As a third sound category, in a third step, a text can be created by means of a plurality of text blocks available, which may be subdivided into a private/fun and a business subcategory. The text blocks may for example include certain names, numbers and possible sound effects (e.g. funny sounds). The text blocks may be freely shifted to any position within a configured text, deleted, and/or used multiple times within a text.

Further, if an individual text is desired, which is not made of pre-configured text blocks, a text may be freely entered, which is optionally supported by exemplary sample texts. The recording thereof will be carried out by a professional speaker in a sound studio, and thereafter combined with the further settings selected.

Although described above with a given order, the selection of sound categories and sound elements may be carried out in any sequence.

By means of preparation means (not shown) in the sound configuration subsystem, according to one embodiment, the selected sound elements of selected sound categories can be prepared as an individual personalized sound. Such preparation means are e.g. operable for mixing the selected sound elements in any feasible way, adjusting volumes of certain sound elements, adapting intro and/or outro lengths of sound elements, and/or pre-playing the finished sound to the user in realtime.

For example, the volume of the music may be decreased, whereas the volume of the voice may be increased.

According to a further embodiment, the system is connectable to external platforms providing sounds, e.g. music. This option further contributes to the availability of the most up-to-date music, which users like to use best.

The sound configuration subsystem of one embodiment further comprises an activation means in order to enable the user to order the personal sound, and/or to send it as a ring tone (e.g. in a short message service), a ring back tone or an outbound sound greeting to an appropriate entity in the system or in the network.

Especially for business users, it may be desirable that, on the one hand, every employee is enabled to configure his/her own sound-based services (such as mailbox greetings) and that, on the other hand, the corporate identity or professional appearance to the outside is preserved (acoustic business card).

According to one embodiment, the system enables such a feature in that the sound configuration subsystem further comprises authorization means for managing and controlling an authorization of a user and admission means for admitting a user to utilize those of the predetermined sound categories for configuring a personalized sound, for which his/her authorization is approved.

In this embodiment, a manager may for example be authorized to freely select any available sound category including music and voice. Thus, the manager may configure a sound without any limitations either for his/her personal purposes and/or those of his/her department, for example. In this case, the employees of this department may for example be authorized to select text blocks only, but not music and voice, for the sound to be created. Hence, all employees of this department will have e.g. mailbox greetings with the same music and voice, but with different texts, thus being personalized according to the respective names of the employees.

Furthermore, even certain sound elements of a certain sound category may be blocked for low priority users. For example, the text blocks containing the company and department names may be fixed (e.g. by an accordingly authorized manager), and only the name and direct dial number of the employee may be selected by him/her.

In the following, there will be described in detail embodiments pertaining to four different sound-based telecommunication services, namely a mailbox greeting service, a ring tone service, a ring back tone service and an outbound greeting service. Basically, the sound configuration parts of these embodiments are rather equivalent to each other, whereas the service provision parts differ, i.e. the techniques to deliver a finished personalized sound product to a user.

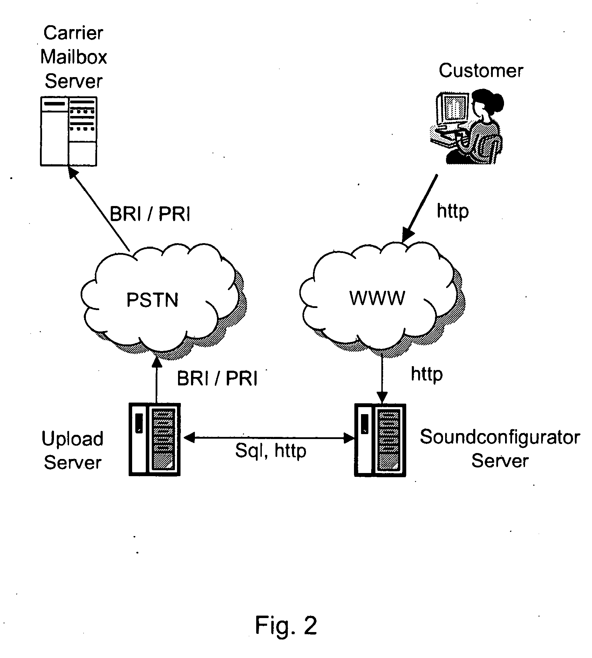

Fig. 2 shows a schematic block diagram of a mailbox greeting system according to an embodiment of the present invention. That is, the thus depicted system is adapted to process a mailbox greeting service as a basic sound-based service.

As illustrated in the example of Fig. 2, after log on and/or registration, a user (customer) connects to a system according to the present embodiment via the Internet (www: world wide web), i.e. using a hypertext transport protocol like HTPP or HTTPS. By way of user operation, a personalized sound is configured at the sound configuration side being denoted in Fig. 2 by soundconfigurator server, as described above.

According to the present embodiment, the service provision subsystem comprises an upload server for receiving a personalized sound from the sound configuration subsystem and for uploading the received sound to a mailbox server of the telecommunication network via a telecommunication interface.

In detail, a finished sound from the soundconfigurator server is transferred to a separate upload server which is exemplarily implemented as an IVR (interactive voice response) server. To this end, HTTP and/or SQL is used on the interface between these two servers. The upload server then connects to a mailbox server of the network, i.e. of the carrier, and uploads the transferred sound as a welcome greeting to the user's mailbox on the carrier's mailbox system. Accordingly, callers which are redirected to the user's mailbox will hear this individual message.

For uploading the sound to the mailbox server, the upload server is adapted to use a telecommunication interface of the network. In Fig. 2, this interface is illustrated as an ISDN (Integrated Services Digital Network) service via a public switched telephone network (PSTN). In ISDN, either a basic rate interface (BRI) according to ITU.T I. 430 or a primary rate interface (PRI) according to ITU.T I.431 may be used. Via such a telecommunication interface, the upload server dials the mailbox server's direct access number (where customers can listen to and adapt their messages manually from any terminal) and uploads the new greeting automatically using a dual tone multi frequency (DTMF) tone navigation according to ITU.T Q.23.

In order to be able to interact with a carrier's mailbox system, the upload server is to be configured to the carrier-dependent navigation tree of the mailbox system.

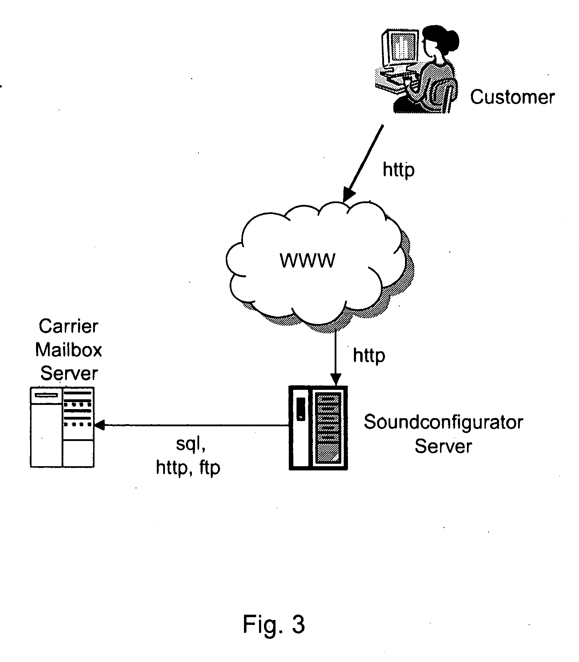

Fig. 3 shows a schematic block diagram of a mailbox greeting system according to another embodiment of the present invention. That is, the thus depicted system is again adapted to process a mailbox greeting service as a basic sound-based service.

As illustrated in the example of Fig. 3, a user connection to a system according to the present embodiment and the sound configuration is effected similarly as described above.

According to the present embodiment, the service provision subsystem comprises digitization means (not shown) for digitizing a personalized sound from the sound configuration subsystem and transfer means for transferring the digitized sound to a mailbox server of the telecommunication network in a predetermined digital format.

In detail, a finished sound from the soundconfigurator server is converted into a digital format, for example according to the a-law or a PCM-coded (PCM: pulse code modulation) WAV file format. Then, this digitized sound is transferred in digital form to a mailbox system of a carrier, which is connected to the soundconfigurator server via HTTP and/or SQL. The digital transfer is for example executed by means of FTP (file transfer protocol), SCP (secure copy program) or VPN (virtual private network). The new greeting is being registered in the user database of the mailbox system.

No pre-configuration e.g. to the tone navigation of a carrier's mailbox system as according to the above embodiment is needed here.

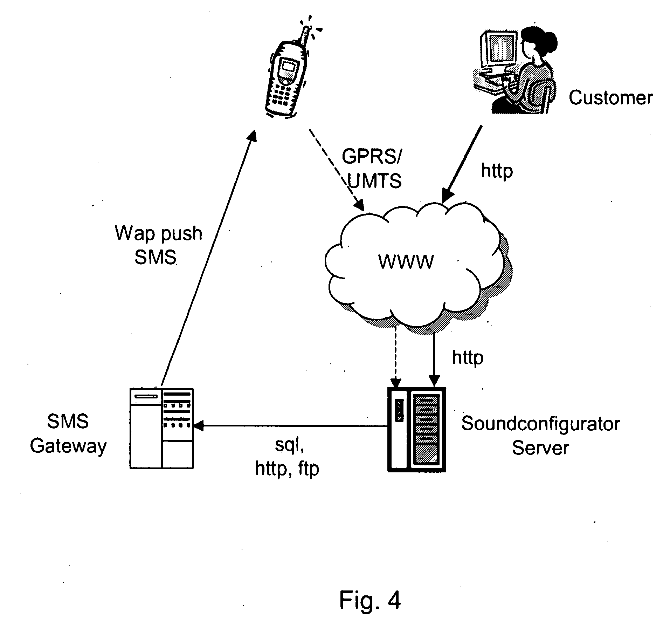

Fig. 4 shows a schematic block diagram of a ring tone system according to an embodiment of the present invention. That is, the thus depicted system is adapted to process a ring tone service as a basic sound-based service.

As illustrated in the example of Fig. 4, a user connection to a system according to the present embodiment and the sound configuration is effected similarly as described above.

According to the present embodiment, the service provision subsystem comprises a storage server (not shown) for storing a personalized sound from the sound configuration subsystem with an unique address and a gateway server for receiving the address of the stored sound and for sending a push message according to a wireless application protocol (WAP) to a terminal of the user. The push message comprises said address or a link thereto, and the storage server is adapted to upload said personalized sound to the user's terminal upon request using a packet data connection.

In detail, a finished sound, i.e. a realtime ring tone, from the soundconfigurator server is stored on a (web) server with an unique file name, i.e. address. The file format may depend on the user's type of terminal. The storage (web) server is not explicitly shown in Fig. 4, and may for example be arranged at the soundconfigurator server or at the SMS gateway depicted in Fig. 4.

The file name, i.e. address, of the stored sound is transferred to a gateway server of the telecommunication network, e.g. via HTTP, SQL, and/or FTP. Then, the gateway server, for example an SMS (short message service) gateway server, sends a WAP push message, for example a WAP push SMS, to the user's terminal. The WAP push message e.g. includes a link to the personalized ring tone stored at the above-mentioned storage server.

Then, upon request from the user's terminal, the stored ring tone is downloaded from the storage server to the user's terminal using a packet data connection such as for example a GPRS (general packet radio service) or a UMTS (universal mobile telecommunication system) connection. According to Fig. 4, the download is depicted by dashed arrows to/from the www "cloud", indicating that the storage server is assumed to be arranged at the soundconfigurator server. Such a download, which from point of view of the storage server represents an upload, may be limited to a maximum number, which is implemented by a kind of network-based or terminal-based counter.

The carrier system does not have to be changed in structure for implementation of this embodiment.

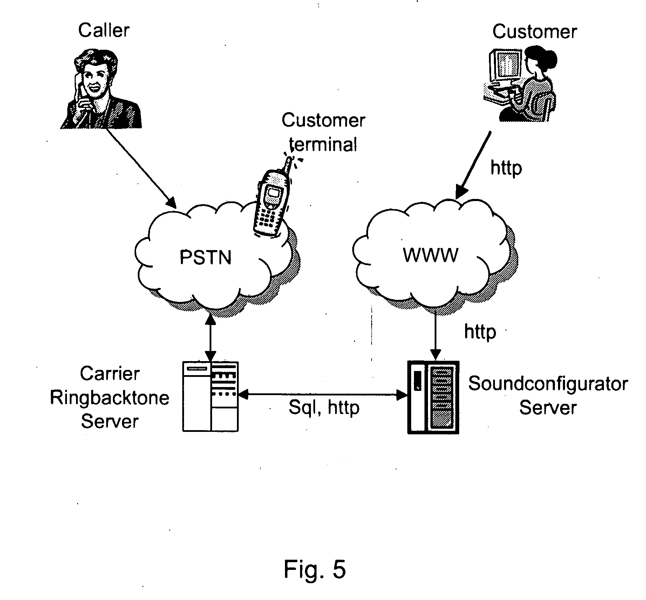

Fig. 5 shows a schematic block diagram of a ring back tone system according to an embodiment of the present invention. That is, the thus depicted system is adapted to process a (color) ring back tone service as a basic sound-based service.

As illustrated in the example of Fig. 5, a user connection to a system according to the present embodiment and the sound configuration is effected similarly as described above.

According to the present embodiment, the service provision subsystem comprises uploading means for receiving a personalized sound from the sound configuration subsystem and for uploading said sound to a ring back tone server of the telecommunication network.

In detail, the personalized ring back tone sound is uploaded from the soundconfigurator server to a ring back tone server of the carrier network, for example by means of HTTP and/or SQL. No further action or processing is needed for providing and activating this service. Only a dedicated gateway for automatically uploading ring back tones to the carrier's network needs to be provided by the system of the present embodiment.

Then, when a caller calls the user's terminal exemplarily being located in a public switched telephone network PSTN, the ring back tone for this user (and/or for the specific caller) is fetched from the carrier ring back tone server and played to the caller instead of a standard call connected signal, for example.

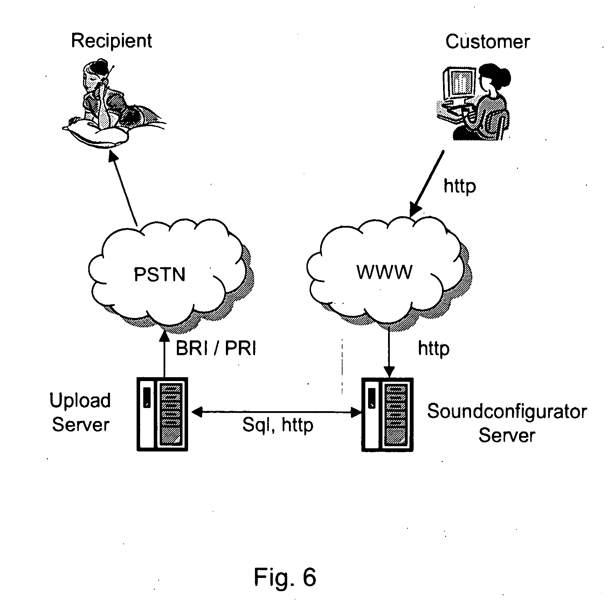

Fig. 6 shows a schematic block diagram of an outbound greeting system according to an embodiment of the present invention. That is, the thus depicted system is adapted to process an outbound greeting service as a basic sound-based service.

As illustrated in the example of Fig. 6, a user connection to a system according to the present embodiment and the sound configuration is effected similarly as described above.

According to the present embodiment, the service provision subsystem comprises an upload server for receiving a personalized sound from the sound configuration subsystem and for uploading the received sound to another user's terminal via the network.

Hence, the structure of this embodiment is rather similar to that of the embodiment according to Fig. 2. Yet, besides receiving a finished sound product from the soundconfigurator server, the upload server of this embodiment (for example an IVR server) uploads the sound directly to another user's terminal. To this end, a telecommunication interface such as ISDN (BRI/PRI) is used. That is, the upload server dials the number of a desired recipient of the outbound greeting message and plays the respectively personalized sound of the system user to the recipient user, when answering the call.

If there is an answering machine (mailbox) on the line, the greeting is played as a new message to the answering machine. To this end, the system (i.e. the upload server) is adapted to identify that an answering machine is on the line, and when a message may be recorded (e.g. by detecting the respective signal tone starting a message recording period).

According to the above, there is presented a system and a method for providing sound-based telecommunication services to a user of a telecommunication network, wherein said system or method is network-based, comprising a sound configuration for configuring a personalized sound based on predetermined sound categories by way of user operation, and a service provision for providing a personalized sound-based telecommunication service based on a basic sound-based service and the configured personalized sound to the user. The basic sound-based service comprises one of the following: a mailbox greeting service, a ring tone service, a ring back tone service, and an outbound greeting service.

Further advantageous aspects of the presented embodiments comprise at least one of the following:
- overall system solution for a variety of different sound-based telecommunication services;
- easy and carrier-independent implementation; and
- flexible structure to fit different carrier's networks.

With regard to the consumer market, up-to-date music, trendy personalized (celebrity) voices, sound personalization and fun to build, as well as single payment are benefits of present embodiments. With regard to the business market, professional appearance (corporate identity), competitive advantage, multilingual voices/texts (if needed), and single payment are benefits of present embodiments.

Even though the invention is described above with reference to the examples according to the accompanying drawings, it is clear that the invention is not restricted thereto. Rather, it is apparent to those skilled in the art that the present invention can be modified in many ways without departing from the scope of the inventive idea as disclosed in the appended claims.

## Claims

1. A system for providing sound-based telecommunication services to a user of a telecommunication network, wherein said system is network-based, said system comprising:
a sound configuration subsystem for configuring a personalized sound based on predetermined sound categories each comprising pre-configured sound elements by way of user operation; and
a service provision subsystem for providing a personalized sound-based telecommunication service based on basic sound-based services and the configured personalized sound to the user
**characterized in that**
the basic sound-based services comprise two or more selected from the group comprising a mailbox greeting service, a ring tone service, a ring back tone service, as well as an outbound greeting service, wherein the pre-configured sound elements are re-used for each basic sound-based service.

2. The system according to claim 1, wherein said sound configuration subsystem comprises:
storage means for storing pre-configured sound elements for each sound category; and
selection means for selecting, for each sound category, at least one of the pre-configured sound elements.

3. The system according to claim 2, wherein said sound configuration subsystem further comprises:
preparation means for preparing a personalized sound based on the selected sound categories and sound elements,
said preparation means further being operable for mixing the selected sound elements, adjusting volumes of sound elements, adapting intro and/or outro lengths of sound elements, and/or pre-playing the finished sound to the user.

4. The system according to any one of the preceding claims, wherein said sound configuration subsystem further comprises:
authorization means for managing and controlling an authorization of a user; and
admission means for admitting a user to utilize those of the predetermined sound categories for configuring a personalized sound, for which authorization is approved.

5. The system according to any one of the preceding claims, wherein said sound configuration subsystem further comprises a web-based user interface, and is adapted to be operated by means of a hypertext transport protocol.

6. The system according to any one of the preceding claims, wherein the predetermined sound categories comprise at least one of the following: music, voice, text blocks, and/or sound effects.

7. The system according to any one of claims 1 to 6, wherein the basic sound-based services comprise a mailbox greeting service, and said service provision subsystem comprises:
an upload server for receiving a personalized sound from the sound configuration subsystem and for uploading the received sound to a mailbox server of the telecommunication network via a telecommunication interface.

8. The system according to claim 7, wherein said upload server is adapted to dial a direct access number of the mailbox server and to use a dual tone multi frequency, DTMF, tone navigation.

9. The system according to any one of claims 1 to 6, wherein the basic sound-based services comprise a mailbox greeting service, and said service provision subsystem comprises:
digitization means for digitizing a personalized sound from the sound configuration subsystem; and
transfer means for transferring the digitized sound to a mailbox server of the telecommunication network in a predetermined digital format.

10. The system according to any one of claims 1 to 6, wherein the basic sound-based services comprise a ring tone service, and said service provision subsystem comprises:
a storage server for storing a personalized sound from the sound configuration subsystem with an unique address; and
a gateway server for receiving the address of the stored sound and for sending a push message according to a wireless application protocol to a terminal of the user, wherein said push message comprises said address,
said storage server being adapted to upload said personalized sound to the user's terminal upon request using a packet data connection.

11. The system according to any one of claims 1 to 6, wherein the basic sound-based services comprise a ring back tone service, and said service provision subsystem comprises:
uploading means for receiving a personalized sound from the sound configuration subsystem and for uploading said sound to a ring back tone server of the telecommunication network.

12. The system according to any one of claims 1 to 6, wherein the basic sound-based services comprise an outbound greeting service, and said service provision subsystem comprises:
an upload server for receiving a personalized sound from the sound configuration subsystem and for uploading the received sound to another user's terminal via the telecommunication network.

13. The system according to claim 12, wherein said upload server is adapted to dial a number of the other user's terminal and to play the personalized sound to the other user upon answering.

14. A method for providing sound-based telecommunication services to a user of a telecommunication network, wherein said method is network-based, said method comprising
a sound configuration step for configuring a personalized sound based on predetermined sound categories each comprising pre-configured sound elements by way of user operation, and
a service provision step for providing a personalized sound-based telecommunication service based on basic sound-based services and the configured personalized sound to the user,
**characterized in that**
the basic sound-based services comprise two or more selected from the group comprising a mailbox greeting service, a ring tone service, a ring back tone service, as well as an outbound greeting service, and the method further comprises
re-using the pre-configured sound elements for each basic sound-based service.

15. The method according to claim 14, further comprising storing pre-configured sound elements for each sound category; and
selecting, for each sound category, at least one of the pre-configured sound elements.

16. The method according to claim 15, further comprising
preparing a personalized sound based on the selected sound categories and sound elements,
mixing the selected sound elements, adjusting volumes of sound elements, adapting intro and/or outro lengths of sound elements, and/or pre-playing the finished sound to the user by said preparation means.

17. The method according to any one of claims 14 to 16 further comprising
managing and controlling an authorization of a user; and
admitting a user to utilize those of the predetermined sound categories for configuring a personalized sound, for which authorization is approved.

18. The method according to any one of claims 14 to 17, wherein the predetermined sound categories comprise at least one of the following: music, voice, text blocks, and/or sound effects.

19. The method according to any one of claims 14 to 18, wherein the basic sound-based services comprise a mailbox greeting service, the method further comprising
receiving by an upload server a personalized sound from a sound configuration subsystem and uploading the received sound to a mailbox server of the telecommunication network via a telecommunication interface.

20. The method according to any one of claims 14 to 19, wherein the basic sound-based services comprise a mailbox greeting service, the method further comprising
digitizing a personalized sound from the sound configuration subsystem; and
transferring the digitized sound to a mailbox server of the telecommunication network in a predetermined digital format.

21. The method according to any one of claims 14 to 19, wherein the basic sound-based services comprise a ring tone service, the method further comprising
storing a personalized sound from a sound configuration subsystem with an unique address;
receiving the address of the stored sound from a gateway server;
sending a push message by the gateway server according to a wireless application protocol to a terminal of the user, wherein said push message comprises said address; and
uploading said personalized sound by a storage server to a user terminal upon request using a packet data connection.

22. The method according to any one of claims 14 to 19, wherein the basic sound-based services comprise a ring back tone service, the method further comprising
receiving a personalized sound from a sound configuration subsystem and uploading said sound to a ring back tone server of the telecommunication network.

23. The method according to any one of claims 14 to 19, wherein the basic sound-based services comprise an outbound greeting service, the method further comprising
receiving a personalized sound from a sound configuration subsystem and uploading the received sound to another user terminal via the telecommunication network.

24. The method according to claim 23, further comprising
dialing a number of the another user terminal by an upload server; and
playing the personalized sound on the another user terminal upon answering.

## Patentansprüche

1. System zum Bereitstellen von tonbasierten Telekommunikationsdiensten für einen Benutzer eines Telekommunikationsnetzwerks, wobei das System netzwerkbasiert ist, mit:
einem Tonkonfigurationsuntersystem zum Konfigurieren eines personalisierten Tons auf der Grundlage von vorbestimmten Tonkategorien, von denen jede vorkonfigurierte Tonelemente umfasst, mittels Benutzerbedienung; und
einem Dienstbereitstellungsuntersystem zum Bereitstellen eines personalisierten tonbasierten Telekommunikationsdienstes auf der Grundlage von grundlegenden tonbasierten Diensten und des konfigurierten personalisierten Tons für den Benutzer,
**dadurch gekennzeichnet, dass**
die grundlegenden tonbasierten Dienste zwei oder mehr Ausgewählte aus der Gruppe mit einem Postfachgrußdienst, einem Klingeltondienst, einem Rückruftondienst sowie einem Ausgangsgrußdienst umfassen, wobei die vorkonfigurierten Tonelemente für jeden grundlegenden tonbasierten Dienst wiederverwendet werden.

2. System gemäß Anspruch 1, wobei das Tonkonfigurationsuntersystem umfasst:
eine Speichereinrichtung zum Speichern von vorkonfigurierten Tonelementen für jede Tonkategorie; und
eine Auswahleinrichtung zum Auswählen zumindest eines der vorkonfigurierten Tonelemente für jede Tonkategorie.

3. System gemäß Anspruch 2, wobei das Tonkonfigurationsuntersystem umfasst:
eine Ausbildungseinrichtung zum Ausbilden eines personalisierten Tons auf der Grundlage der ausgewählten Tonkategorien und Tonelemente,
wobei die Ausbildungseinrichtung betreibbar ist, um die ausgewählten Tonelemente zu mischen, um Lautstärken von Tonelementen einzustellen, um Intro- und/ oder Outrolängen von Tonelementen anzupassen und/ oder um den fertigen Ton vorab dem Benutzer abzuspielen.

4. System gemäß zumindest einem der vorhergehenden Ansprüche, wobei das Tonkonfigurationsuntersystem umfasst:
eine Autorisationseinrichtung zum Verwalten und Steuern einer Autorisation eines Benutzers; und
eine Zulassungseinrichtung zum Zulassen eines Benutzers, für den eine Autorisation genehmigt wird, zum Verwenden jener vorbestimmten Tonkategorien, um einen personalisierten Ton zu konfigurieren.

5. System gemäß zumindest einem der vorhergehenden Ansprüche, wobei das Tonkonfigurationsuntersystem eine netzbasierte Benutzerschnittstelle umfasst und eingerichtet ist, um mittels eines Hypertexttransportprotokolls betrieben zu werden.

6. System gemäß zumindest einem der vorhergehenden Ansprüche, wobei die vorbestimmten Tonkategorien zumindest eine der folgenden umfassen: Musik, Stimme, Textblöcke und/ oder Toneffekte.

7. System gemäß zumindest einem der Ansprüche 1 bis 6, wobei die grundlegenden tonbasierten Dienste einen Postfachgrußdienst umfassen und das Tonkonfigurationsuntersystem umfasst:
einen Hochladeserver zum Empfangen eines personalisierten Tons von dem Tonkonfigurationsuntersystem und zum Hochladen des empfangenen Tons zu einem Postfachserver des Telekommunikationsnetzwerks über eine Telekommunikationsschnittstelle.

8. System gemäß Anspruch 7, wobei der Hochladeserver eingerichtet ist, um eine direkte Zugriffsnummer des Postfachservers zu wählen, und um eine Tonnavigation einer Dualtonmehrfachfrequenz, DTMF, zu verwenden.

9. System gemäß zumindest einem der Ansprüche 1 bis 6, wobei die grundlegenden tonbasierten Dienste einen Postfachgrußdienst umfassen und das Tonkonfigurationsuntersystem umfasst:
eine Digitalisierungseinrichtung zum Digitalisieren eines personalisierten Tons von dem Tonkonfigurationsuntersystem; und
eine Übermittlungseinrichtung zum Übermitteln des digitalisierten Tons zu einem Postfachserver des Telekommunikationsnetzwerks in einem vorbestimmten digitalen Format.

10. System gemäß zumindest einem der Ansprüche 1 bis 6, wobei die grundlegenden tonbasierten Dienste einen Klingeltondienst umfassen und das Tonkonfigurationsuntersystem umfasst:
einen Speicherserver zum Speichern eines personalisierten Tons von dem Tonkonfigurationsuntersystem mit einer eindeutigen Adresse; und
einen Gatewayserver zum Empfangen der Adresse des gespeicherten Tons und zum Senden einer Push- Nachricht gemäß einem drahtlosen Anwendungsprotokoll zu einem Endgerät des Benutzers, wobei die Push- Nachricht die Adresse umfasst,
wobei der Speicherserver eingerichtet ist, um den personalisierten Ton für das Endgerät des Benutzers auf Anforderung unter Verwendung einer Paketdatenverbindung hochzuladen.

11. System gemäß zumindest einem der Ansprüche 1 bis 6, wobei die grundlegenden tonbasierten Dienste einen Rückruftondienst umfassen und das Tonkonfigurationsuntersystem umfasst:
eine Hochladeeinrichtung zum Empfangen eines personalisierten Tons von dem Tonkonfigurationsuntersystem und zum Hochladen des Tons zu einem Rückruftonserver des Telekommunikationsnetzwerks.

12. System gemäß zumindest einem der Ansprüche 1 bis 6, wobei die grundlegenden tonbasierten Dienste einen Ausgangsgrußdienst umfassen und das Tonkonfigurationsuntersystem umfasst:
einen Hochladeserver zum Empfangen eines personalisierten Tons von dem Tonkonfigurationsuntersystem und zum Hochladen des empfangenen Tons zu einem Endgerät eines weiteren Benutzers über das Telekommunikationsnetzwerks.

13. System gemäß Anspruch 12, wobei der Hochladeserver eingerichtet ist, um eine Nummer des Endgeräts des anderen Benutzers zu wählen, und um den personalisierten Ton für den anderen Benutzer bei Annahme abzuspielen.

14. Verfahren zum Bereitstellen von tonbasierten Telekommunikationsdiensten für einen Benutzer eines Telekommunikationsnetzwerks, wobei das Verfahren netzwerkbasiert ist, mit den Schritten:
einem Tonkonfigurationsschritt zum Konfigurieren eines personalisierten Tons auf der Grundlage von vorbestimmten Tonkategorien, von denen jede vorkonfigurierte Tonelemente umfasst, mittels Benutzerbedienung; und
einem Dienstbereitstellungsschritt zum Bereitstellen eines personalisierten tonbasierten Telekommunikationsdienstes auf der Grundlage von grundlegenden tonbasierten Diensten und des konfigurierten personalisierten Tons für den Benutzer,
**dadurch gekennzeichnet, dass**
die grundlegenden tonbasierten Dienste zwei oder mehr Ausgewählte aus der Gruppe mit einem Postfachgrußdienst, einem Klingeltondienst, einem Rückruftondienst sowie einem Ausgangsgrußdienst umfassen, wobei das Verfahren umfasst:
Wiederverwenden der vorkonfigurierten Tonelemente für jeden grundlegenden tonbasierten Dienst.

15. Verfahren gemäß Anspruch 14, mit den Schritten:
Speichern von vorkonfigurierten Tonelementen für jede Tonkategorie; und
Auswählen zumindest eines der vorkonfigurierten Tonelemente für jede Tonkategorie.

16. Verfahren gemäß Anspruch 15, mit den Schritten:
Ausbilden eines personalisierten Tons auf der Grundlage der ausgewählten Tonkategorien und Tonelemente,
Mischen der ausgewählten Tonelemente, Einstellen von Lautstärken von Tonelementen, Anpassen von Intro- und/oder Outrolängen von Tonelementen und/ oder Vorab Abspielen des fertigen Ton für den Benutzer durch die Ausbildungseinrichtung.

17. Verfahren gemäß zumindest einem der Ansprüche 14 bis 16, mit den Schritten:
Verwalten und Steuern einer Autorisation eines Benutzers; und
Zulassen eines Benutzers, für den eine Autorisation genehmigt wird, zum Verwenden jener vorbestimmten Tonkategorien, um einen personalisierten Ton zu konfigurieren.

18. Verfahren gemäß zumindest einem der Ansprüche 14 bis 17, wobei die vorbestimmten Tonkategorien zumindest eine der folgenden umfassen: Musik, Stimme, Textblöcke und/oder Toneffekte.

19. Verfahren gemäß zumindest einem der Ansprüche 14 bis 18, wobei die grundlegenden tonbasierten Dienste einen Postfachgrußdienst umfassen, mit den Schritten:
Empfangen, durch einen Hochladeserver, eines personalisierten Tons von dem Tonkonfigurationsuntersystem und Hochladen des empfangenen Tons zu einem Postfachserver des Telekommunikationsnetzwerks über eine Telekommunikationsschnittstelle.

20. Verfahren gemäß zumindest einem der Ansprüche 14 bis 19, wobei die grundlegenden tonbasierten Dienste einen Postfachgrußdienst umfassen, mit den Schritten:
Digitalisieren eines personalisierten Tons von dem Tonkonfigurationsuntersystem; und
Übermitteln des digitalisierten Tons zu einem Postfachserver des Telekommunikationsnetzwerks in einem vorbestimmten digitalen Format.

21. Verfahren gemäß zumindest einem der Ansprüche 14 bis 19, wobei die grundlegenden tonbasierten Dienste einen Klingeltondienst umfassen, mit den Schritten:
Speichern eines personalisierten Tons von dem Tonkonfigurationsuntersystem mit einer eindeutigen Adresse;
Empfangen der Adresse des gespeicherten Tons von einem Gatewayserver;
Senden einer Push- Nachricht durch den Gatewayserver gemäß einem drahtlosen Anwendungsprotokoll zu einem Endgerät des Benutzers, wobei die Push- Nachricht die Adresse umfasst; und
Hochladen des personalisierten Tons durch einen Speicherserver für das Endgerät des Benutzers auf Anforderung unter Verwendung einer Paketdatenverbindung.

22. Verfahren gemäß zumindest einem der Ansprüche 14 bis 19, wobei die grundlegenden tonbasierten Dienste einen Rückruftondienst umfassen, mit den Schritten:
Empfangen eines personalisierten Tons von dem Tonkonfigurationsuntersystem und Hochladen des Tons zu einem Rückruftonserver des Telekommunikationsnetzwerks.

23. Verfahren gemäß zumindest einem der Ansprüche 14 bis 19, wobei die grundlegenden tonbasierten Dienste einen Ausgangsgrußdienst umfassen, mit den Schritten:
Empfangen eines personalisierten Tons von dem Tonkonfigurationsuntersystem und Hochladen des empfangenen Tons zu einem Endgerät eines weiteren Benutzers über das Telekommunikationsnetzwerks.

24. Verfahren gemäß Anspruch 23, mit den Schritten:
Wählen einer Nummer des Endgeräts des anderen Benutzers; und
Abspielen des personalisierten Tons für das Endgerät des anderen Benutzers bei Annahme.

## Revendications

1. Système pour fournir des services de télécommunication sonores à un utilisateur d'un réseau de télécommunication, où ledit système est basé sur le réseau, ledit système comprenant :
un sous-système de configuration de son qui sert à configurer un son personnalisé sur la base de catégories de sons prédéterminées comprenant chacune des éléments de sons préconfigurés au moyen d'une opération de l'utilisateur;
et
un sous-système fournissant des services qui sert à fournir un service de télécommunication personnalisé basé sur le son fondé sur des services de base s'appuyant sur des sons et du son personnalisé configuré à l'utilisateur
**caractérisé en ce que**
les services de base s'appuyant sur des sons comprennent deux ou plusieurs services sélectionnés parmi le groupe qui se compose d'un service d'accueil de boîte aux lettres, d'un service de sonnerie, d'un service de tonalité de retour d'appel, ainsi qu'un service d'accueil d'appel sortant, où les éléments de son préconfigurés sont réutilisés pour chaque service de base s'appuyant sur des sons.

2. Système selon la revendication 1, dans lequel ledit sous-système de configuration de son comprend :
un moyen de stockage pour stocker des éléments de sons préconfigurés pour chaque catégorie de son; et
un moyen de sélection pour sélectionner, pour chaque catégorie de son, au moins l'un des éléments de sons préconfigurés.

3. Système selon la revendication 2, dans lequel ledit sous-système de configuration de son comprend en plus :
un moyen de préparation pour préparer un son personnalisé sur la base des catégories de sons et des éléments de sons sélectionnés,
ledit moyen de préparation fonctionnant en plus pour mélanger les éléments de sons sélectionnés, ajuster des volumes des éléments de sons, adapter des longueurs d'entrée et/ou de sortie des éléments de sons, et/ou pré-reproduire le son fini à l'utilisateur.

4. Système selon l'une quelconque des revendications précédentes, dans lequel ledit sous-système de configuration de son comprend en plus :
un moyen d'autorisation pour gérer et commander une autorisation d'un utilisateur; et
un moyen de permission pour permettre à un utilisateur d'utiliser ces catégories de sons prédéterminées pour configurer un son personnalisé, pour lequel l'autorisation est approuvée.

5. Système selon l'une quelconque des revendications précédentes, dans lequel ledit sous-système de configuration de son comprend en plus une interface utilisateur Web, et est adapté pour fonctionner au moyen d'un protocole HTTP.

6. Système selon l'une quelconque des revendications précédentes, dans lequel les catégories de sons prédéterminées comprennent au moins l'un parmi : de la musique, de la voix, des textes, et/ou des effets sonores.

7. Système selon l'une quelconque des revendications 1 à 6, dans lequel les services de base s'appuyant sur des sons comprennent un service d'accueil de boîte aux lettres, et ledit sous-système fournissant un service comprend :
un serveur de téléchargement pour recevoir un son personnalisé provenant du sous-système de configuration de son et pour télécharger le son reçu à un serveur de boîte aux lettres du réseau de télécommunication par l'intermédiaire d'une interface de télécommunication.

8. Système selon la revendication 7, dans lequel ledit serveur de téléchargement est adapté pour composer un numéro d'accès direct du serveur de boîte aux lettres et pour utiliser une navigation sur des tonalités de type DTMF, multifréquence à deux tonalités.

9. Système selon l'une quelconque des revendications 1 à 6,
dans lequel les services de base s'appuyant sur des sons comprennent un service d'accueil de boîte aux lettres, et ledit sous-système fournissant un service comprend :
un moyen de numérisation pour numériser un son personnalisé provenant du sous-système de configuration de son; et
un moyen de transfert pour transférer le son numérisé à un serveur de boîte aux lettres du réseau de télécommunication en un format numérique prédéterminé.

10. Système selon l'une quelconque des revendications 1 à 6, dans lequel les services de base s'appuyant sur des sons comprennent un service de sonnerie, et ledit sous-système fournissant un service comprend :
un serveur de stockage pour stocker un son personnalisé provenant du sous-système de configuration de son avec une adresse unique;
et
un serveur passerelle pour recevoir l'adresse du son stocké et pour envoyer un message de distribution selon un protocole WAP à un terminal de l'utilisateur, où ledit message de distribution comprend ladite adresse,
ledit serveur de stockage étant adapté pour télécharger ledit son personnalisé au terminal d'utilisateur sur requête en utilisant une connexion de données par paquets.

11. Système selon l'une quelconque des revendications 1 à 6, dans lequel les services de base s'appuyant sur des sons comprennent un service de tonalité de retour d'appel, et ledit sous-système fournissant un service comprend :
un moyen de téléchargement pour recevoir un son personnalisé provenant du sous-système de configuration de son et pour télécharger ledit son à un serveur de tonalité de retour d'appel du réseau de télécommunication.

12. Système selon l'une quelconque des revendications 1 à 6, dans lequel les services de base s'appuyant sur des sons comprennent un service d'accueil d'appel sortant, et ledit sous-système fournissant un service comprend :
un serveur de téléchargement pour recevoir un son personnalisé provenant du sous-système de configuration de son et pour télécharger le son reçu à un autre terminal d'utilisateur par l'intermédiaire du réseau de télécommunication.

13. Système selon la revendication 12, dans lequel ledit serveur de téléchargement est adapté pour composer un numéro de l'autre terminal d'utilisateur et pour reproduire, au moment de répondre, un son personnalisé à l'autre utilisateur.

14. Procédé pour fournir des services de télécommunication basés sur le son à un utilisateur d'un réseau de télécommunication, dans lequel ledit procédé est à commande réseau, ledit procédé comprenant
une étape de configuration de son où l'on configure un son personnalisé sur la base de catégories de sons prédéterminées comprenant chacune des éléments de sons préconfigurés au moyen d'une opération de l'utilisateur, et
une étape de fourniture de service où l'on fournit un service de télécommunication personnalisé basé sur le son fondé sur des services de base s'appuyant sur des sons et le son personnalisé configuré à l'utilisateur,
**caractérisé en ce que**
les services de base s'appuyant sur des sons comprennent deux ou plusieurs services du groupe se composant d'un service d'accueil de boîte aux lettres, d'un service de sonnerie, d'un service de tonalité de retour d'appel, ainsi que d'un service d'accueil d'appel sortant, et le procédé comprend en plus le fait de
réutiliser les éléments de sons préconfigurés pour chaque service de base s'appuyant sur des sons.

15. Procédé selon la revendication 14, comprenant en plus le fait de
stocker des éléments de sons préconfigurés pour chaque catégorie de son; et
sélectionner, pour chaque catégorie de son, au moins l'un des éléments de sons préconfigurés.

16. Procédé selon la revendication 15, comprenant en plus le fait de
préparer un son personnalisé sur la base des catégories de sons et des éléments de sons sélectionnés,
mélanger les éléments de sons sélectionnés, ajuster les volumes des éléments de sons, adapter des longueurs d'entrée et/ou de sortie des éléments de sons, et/ou pré-reproduire le son fini à l'utilisateur par ledit moyen de préparation.

17. Procédé selon l'une quelconque des revendications 14 à 16, comprenant en plus le fait de
gérer et commander une autorisation d'un utilisateur;
et
permettre à un utilisateur d'utiliser ces catégories de sons prédéterminées pour configurer un son personnalisé, pour lequel une autorisation est approuvée.

18. Procédé selon l'une quelconque des revendications 14 à 17, dans lequel les catégories de sons prédéterminées comprennent au moins l'un de ce qui suit : de la musique, de la voix, des textes, et/ou des effets sonores.

19. Procédé selon l'une quelconque des revendications 14 à 18, dans lequel les services de base s'appuyant sur des sons comprennent un service d'accueil de boîte aux lettres, le procédé comprenant en plus le fait de
recevoir par un serveur de téléchargement un son personnalisé provenant d'un sous-système de configuration de son et télécharger le son reçu à un serveur de boîte aux lettres du réseau de télécommunication par l'intermédiaire d'une interface de télécommunication.

20. Procédé selon l'une quelconque des revendications 14 à 19,
dans lequel les services de base s'appuyant sur des sons comprennent un service d'accueil de boîte aux lettres, le procédé comprenant en plus le fait de
numériser un son personnalisé provenant du sous-système de configuration de son; et
transférer le son numérisé à un serveur de boîte aux lettres du réseau de télécommunication dans un format numérique prédéterminé.

21. Procédé selon l'une quelconque des revendications 14 à 19,
dans lequel les services de base s'appuyant sur des sons comprennent un service de sonnerie, le procédé comprenant en plus le fait de
stocker un son personnalisé provenant d'un sous-système de configuration de son avec une adresse unique;
recevoir l'adresse du son stocké depuis un serveur passerelle;
envoyer un message de distribution par le serveur passerelle selon un protocole WAP à un terminal de l'utilisateur, dans lequel ledit message de distribution comprend ladite adresse; et
télécharger ledit son personnalisé par un serveur de stockage à un terminal d'utilisateur sur requête en utilisant une connexion de données par paquets.

22. Procédé selon l'une quelconque des revendications 14 à 19,
dans lequel les services de base s'appuyant sur des sons comprennent un service de tonalité de retour d'appel, le procédé comprenant en plus le fait de
recevoir un son personnalisé provenant d'un sous-système de configuration de son et télécharger ledit son à un serveur de tonalité de retour d'appel du réseau de télécommunication.

23. Procédé selon l'une quelconque des revendications 14 à 19,
dans lequel les services de base s'appuyant sur des sons comprennent un service d'accueil d'appel sortant, le procédé comprenant en plus le fait de
recevoir un son personnalisé provenant du sous-système de configuration de son et télécharger le son reçu à un autre terminal d'utilisateur par l'intermédiaire du réseau de télécommunication.

24. Procédé selon la revendication 23, comprenant en plus le fait de
composer un numéro d'un autre terminal d'utilisateur par un serveur de téléchargement; et
reproduire, au moment de répondre, le son personnalisé sur l'autre terminal d'utilisateur.
